# EUROPEAN PATENT SPECIFICATION

(11) **EP 0 371 050 B1**
(45) Date of publication and mention of the grant of the patent: **03.03.1993**
(21) Application number: 88906203.0
(22) Date of filing: 01.07.1988
(51) Int. Cl.: B65D 90/18, B62D 53/06

(54) **ARRANGEMENT FOR A CLOSEABLE CARGO HOLDER OF THE CONTAINER TYPE**
ANORDNUNG FÜR EINEN ABSCHLIESSBAREN LADERAUM DER CONTAINERART
AGENCEMENT DESTINE A UN SUPPORT DE CHARGEMENT VERROUILLABLE DE TYPE CONTENEUR

(30) Priority: 06.07.1987 SE 8702773
(43) Date of publication of application: 06.06.1990
(73) Proprietor: STRÖMBERG, Gunnar, Dania, FL 33004 (US)
(72) Inventor: STRÖMBERG, Gunnar, Dania, FL 33004 (US)
(74) Representative: Graudums, Valdis
(86) International application number: PCT/SE88/00364
(87) International publication number: WO 89/00138

(56) References cited:
- EP-A- 0 152 966
- CH-A- 351 899
- FR-A- 1 034 084
- US-A- 3 135 528

## Description

### Technical field:

The present invention relates to an arrangement for a closeable cargo holder of the container type with doors located at the rear, and which is designed so as to can be stacked with one cargo holder on top of another cargo holder on board ships etc., for example during transport, and so as to be freighted to the intended destination on land after unloading and to be transferred between shore and ship by means of lifting equipment.

### Background:

Known transport systems, which are suitable for use in ships for so-called door to door transport of cargo holders, are either so-called roll-on/roll-off systems I in which haulage vehicles transport cargo holders A^{I} in question, which are in the form of so-called trailers and which comprise wheels B^{I} fixed on the container A^{I} bearing against a base, between the shore and cargo decks C^{I} located on board the ships, or else container systems II in which closeable cargo holders A^{II} of the container type, which are intended to be transferred between shore and ship by means of loading cranes which are located on shore or on board the ship, are designed so as to be stacked with one cargo holder on top of another cargo holder on board ships etc. in the cargo spaces and on deck, for example during transport.

### Technical problem:

The roll-on/roll-off system I is preferred in the present circumstances, since it permits quicker door to door transport of the goods in the containers A^{I} because only haulage vehicles have to be coupled to the trainers assembled on board the ship, whereas the container system II requires, at the receiving port etc., special wheeled haulage trucks in order for the containers in question, to be assembled on these trucks and which are handled by crane, to be assembled on these trucks and driven to the intended destination on land after unloading. However, this trailer system I is expensive since large dead spaces are formed between the trailers. The ships in which the said system I is used are, moreover, not as quick as the larger existing container freight vessels on, for example, Atlantic crossings. Furthermore, Ro-Ro vessels have expensive and complex ventilation systems because of the exhaust fumes from the haulage vehicles, and special complex and expensive ramp systems are required for loading and unloading in these vessels.

A further prior art device, having the features defined in the first part of claim 1, is known from FR-A-1 034 084, this cargo holder comprising retractable wheels provided in front of the closing doors at the rear of the container which, as a consequence, are housed inside the container space normally reserved for the cargo itself when in their retracted position. This cargo holder further comprises foldable means for attachment to a towing vehicle, such means being positioned on the front wall of the container.

### Solution:

The arrangement according to the present invention is characterized by the features defined in the second part of claim 1.

### Advantages:

The invention provides an arrangement for cargo holders of the container type, which enables a new transport system III to be created which includes the various said advantages of the known systems I, II and in which the cargo holders can be freighted by conventional container transport vessels and driven on their own wheels to the place of destination.

### Description of the figures:

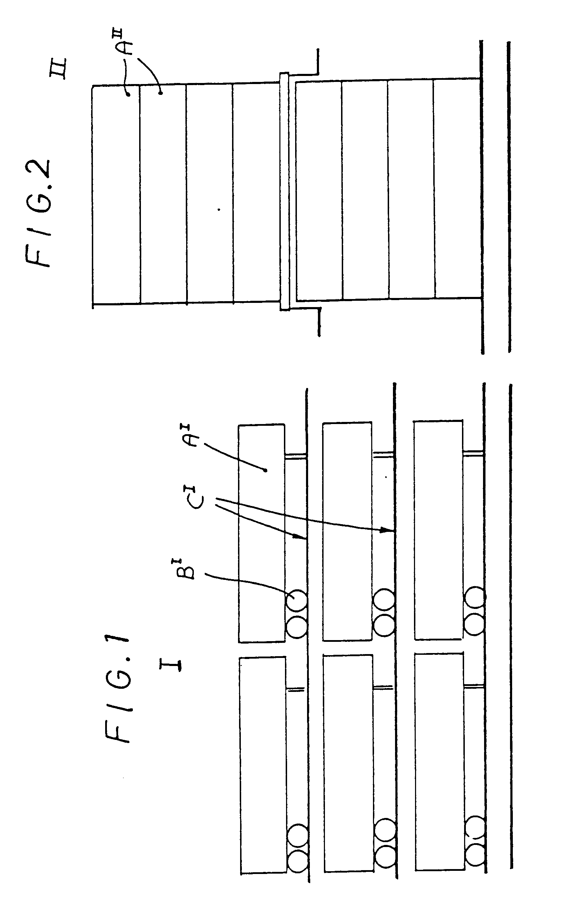

The invention is described below by way of a number of preferred embodiments, reference being made to the attached drawings in which
Fig. 1 shows the principle of a known trailer transport system I,
Fig. 2 shows the principle of a known container transport system,

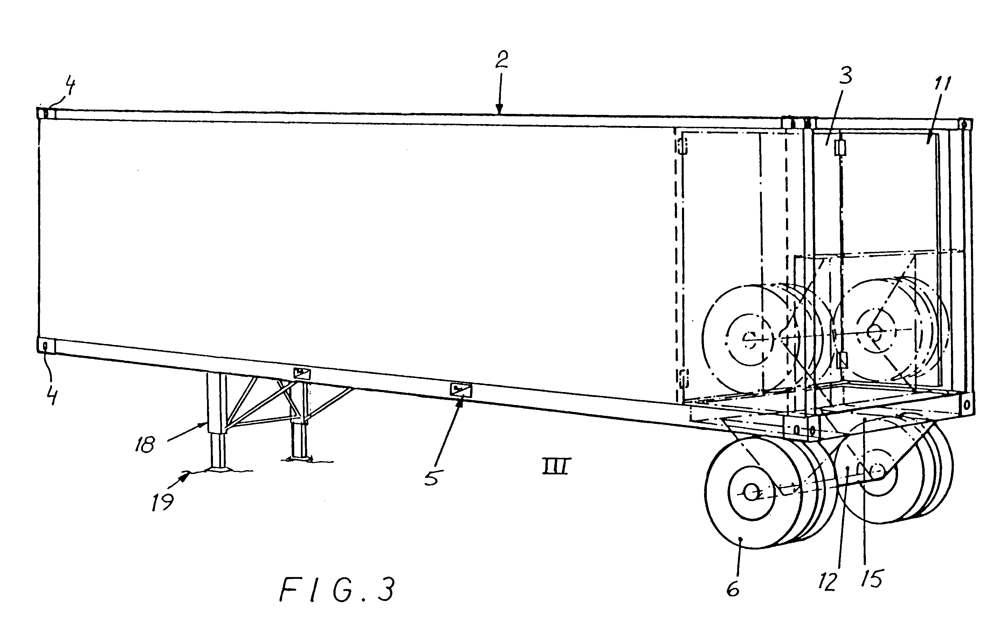

Fig. 3 shows a perspective view, obliquely from the rear, of a cargo holder which comprises an arrangement according to the invention,

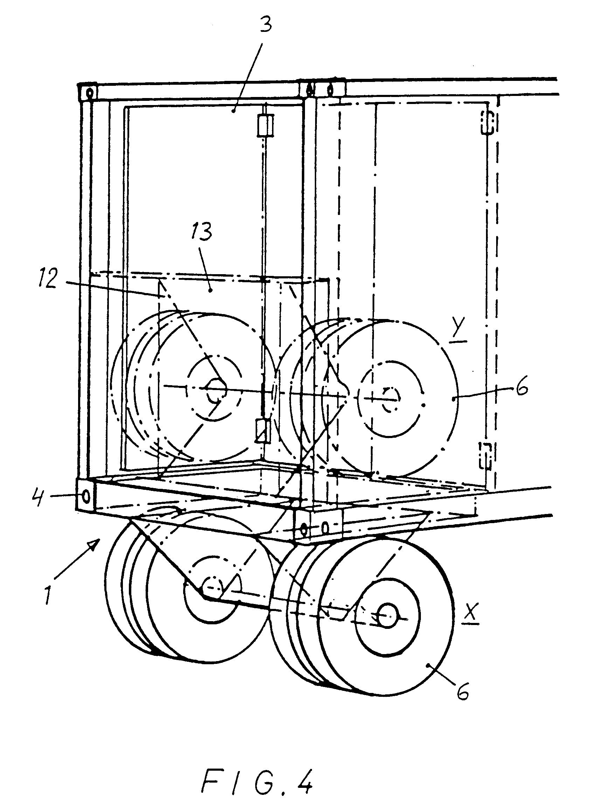

Fig. 4 shows the arrangement in detail at the rear end of the cargo holder,

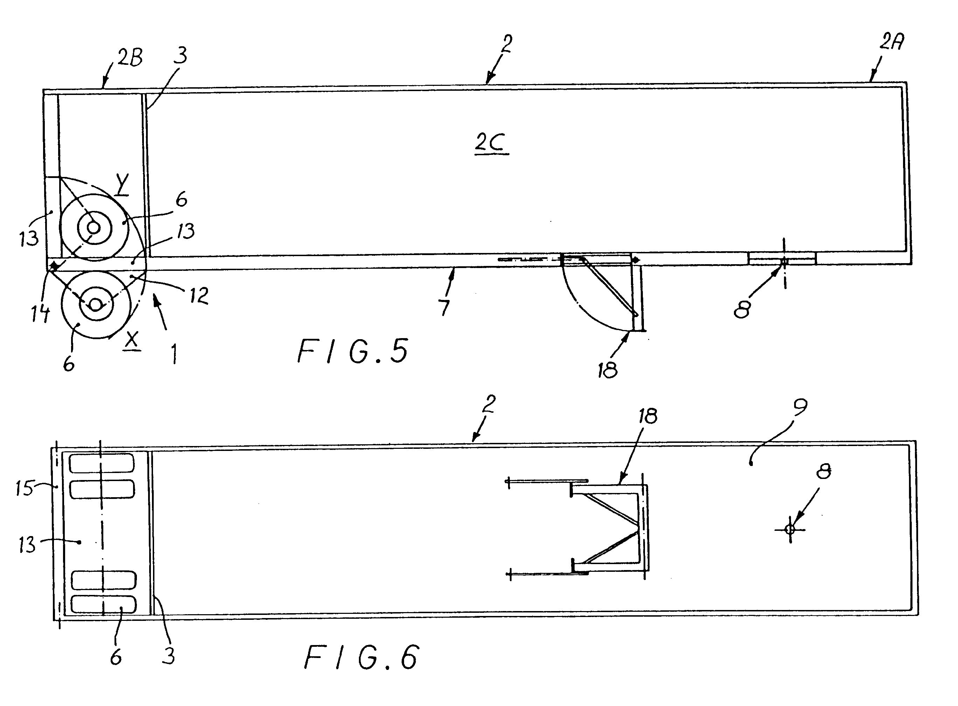

Fig. 5 shows a side view of a cargo holder according to the present invention with diagrammatically shown wheels moved to different positions,
Fig. 6 shows the cargo holder from below,
Fig. 7 shows diagrammatically the rear section of a cargo holder seen from the side,

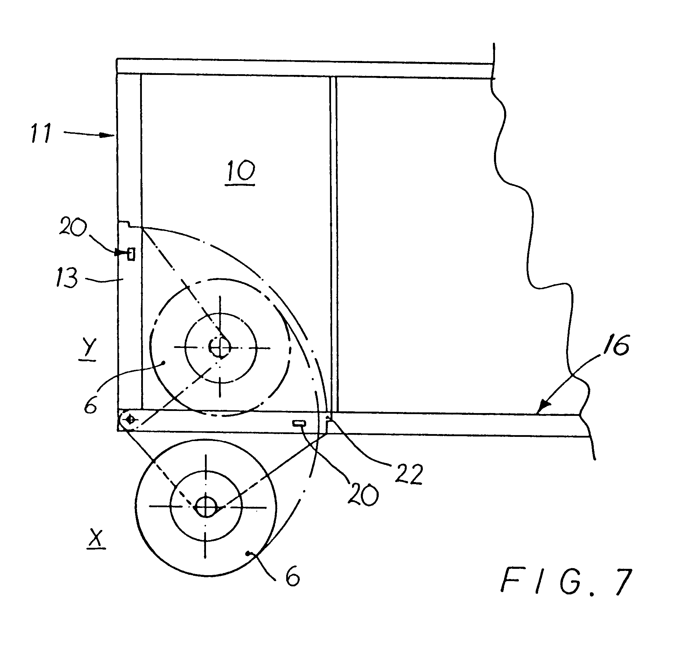

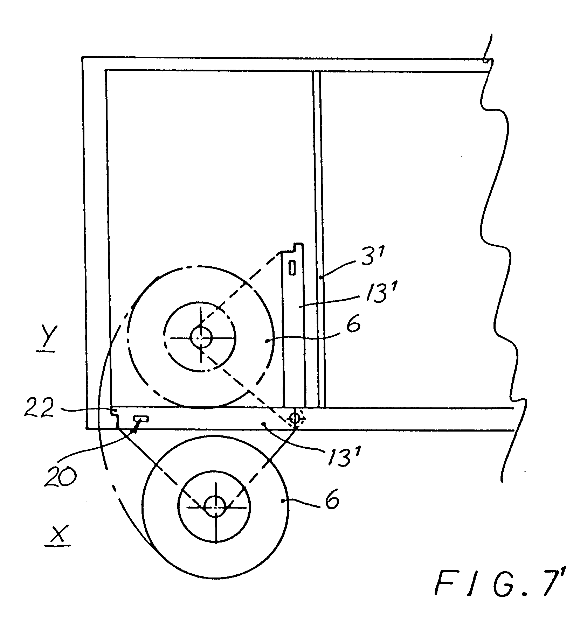

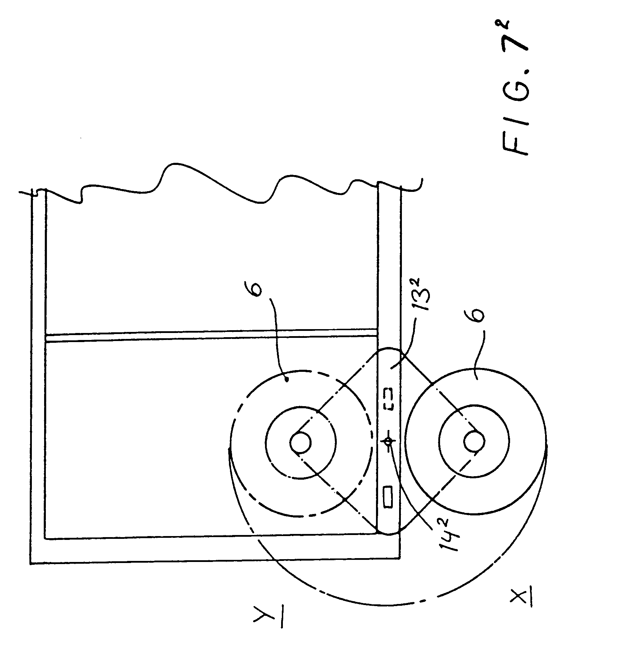

Figs. 7¹ and 7² show two further embodiments,

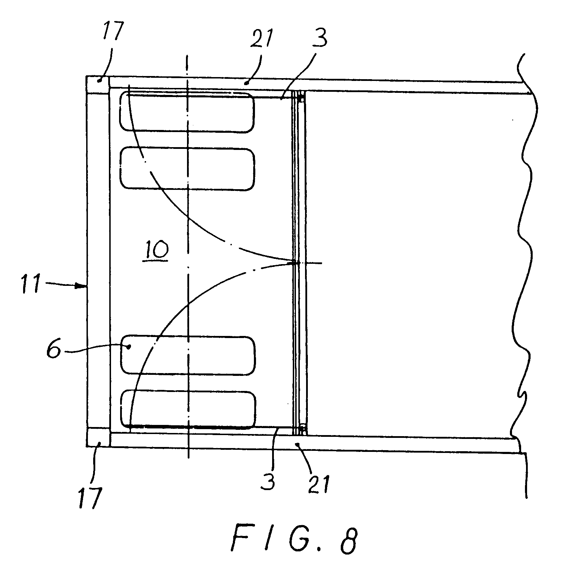

Fig. 8 shows the cargo holder seen from below,

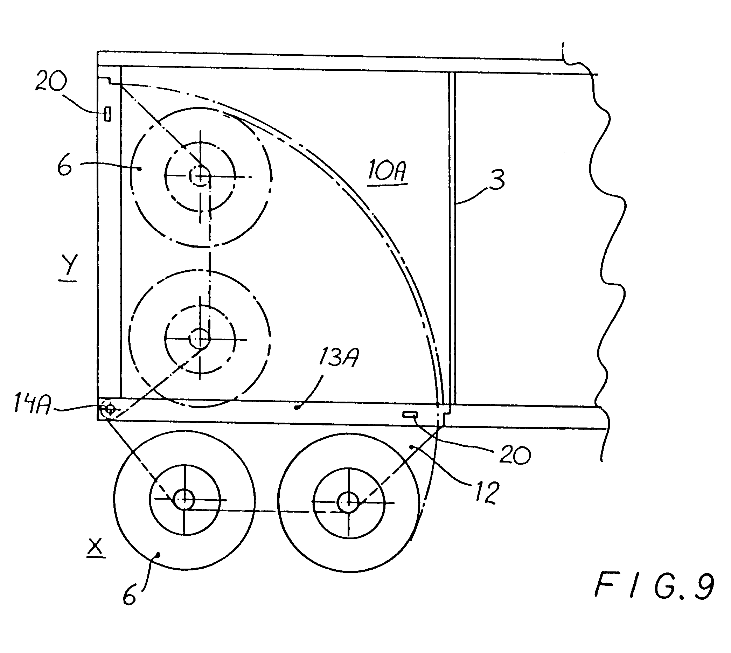

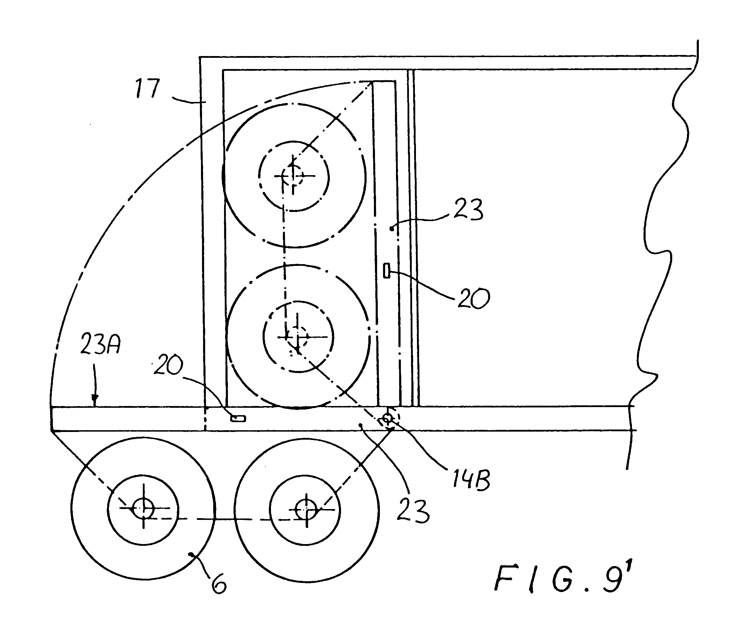

Fig. 9 shows a further example of a cargo holder with a wheel arrangement according to the present invention,
Fig. 9 shows an example of the wheel bearing arrangement according to the invention,

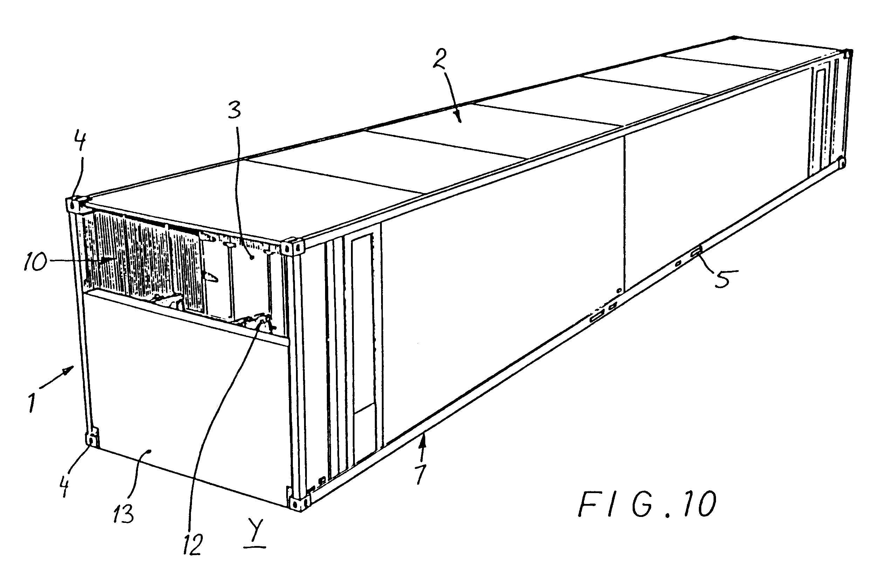

Fig. 10 shows a perspective view of a cargo holder arrangement according to the present invention, seen from the rear and with the wheels raised,

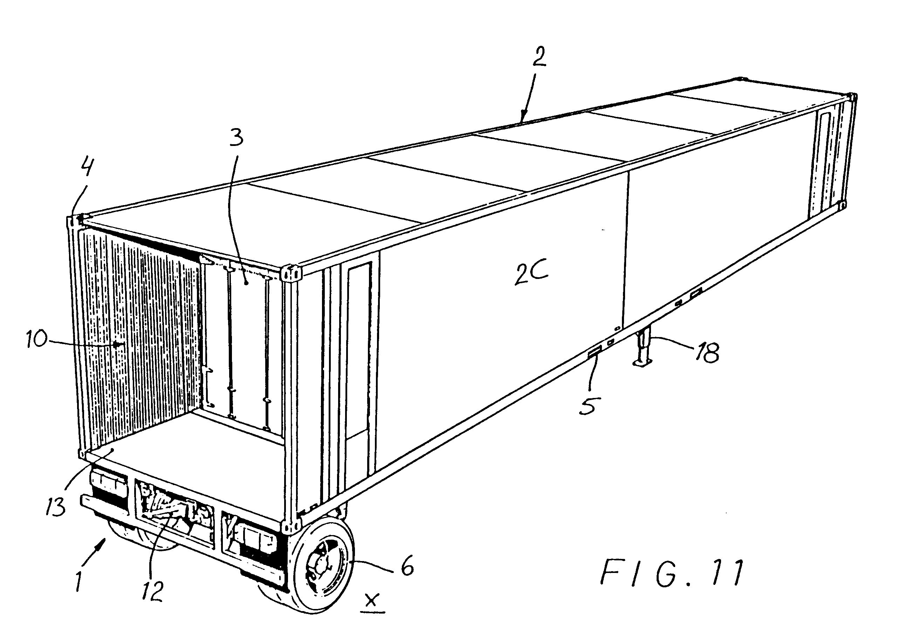

Fig. 11 shows the abovementioned cargo holder again in perspective, but with the wheels arranged in the lowered position,

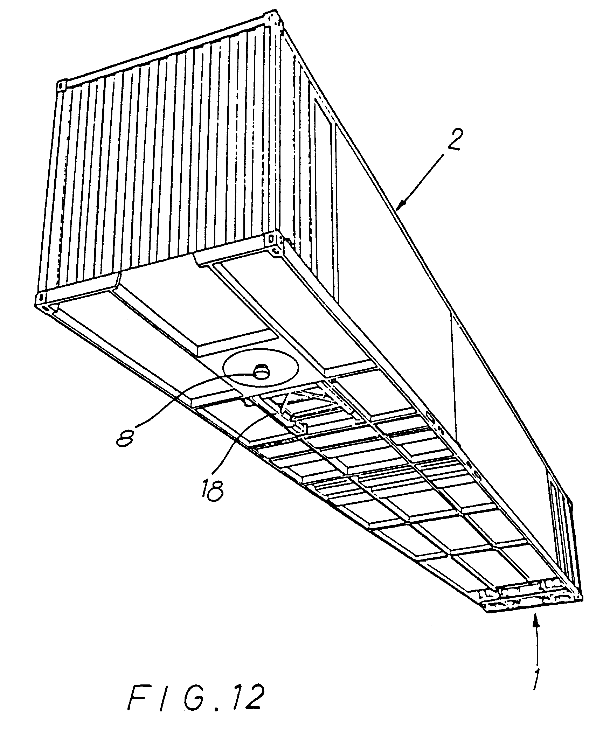

Fig. 12 shows a perspective view of a cargo holder seen obliquely from below and from the front,

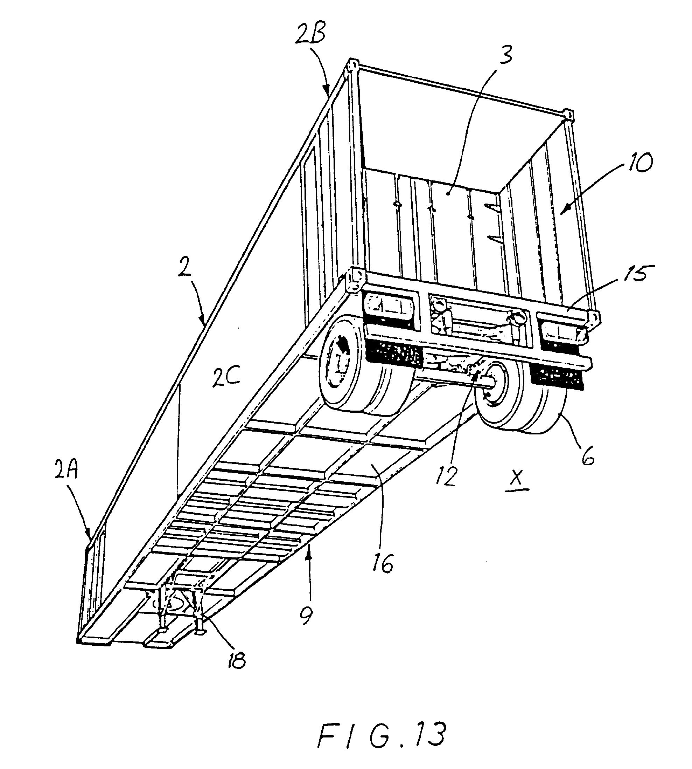

Fig. 13 shows a perspective view of a cargo holder seen obliquely from below and from behind, and

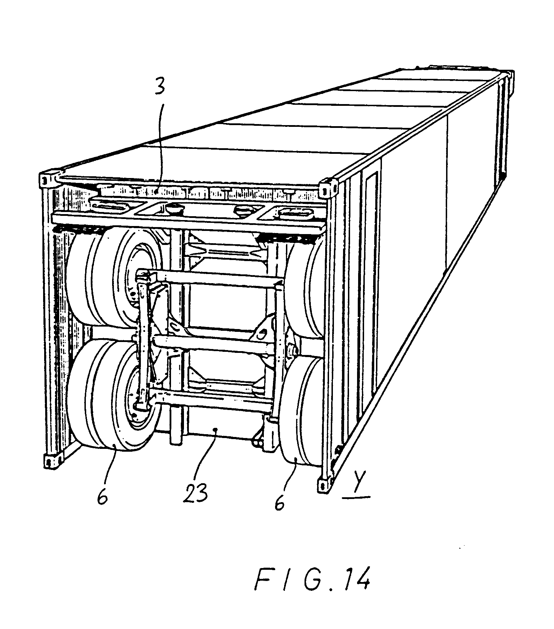

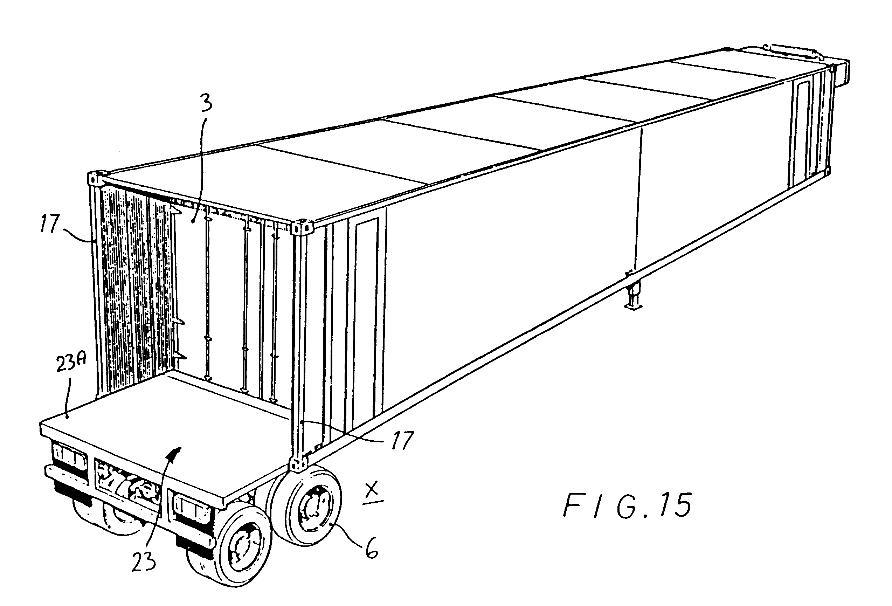

Figs. 14 and 15 show, a cargo holder which comprises a bogie with double wheel axles which are moved between raised and lowered positions.

### Preferred embodiments:

An arrangement 1 for a cargo holder 2 of the container type, which consists of metal with a rectangular shape, and which can essentially comprise those parts which are normally to be found arranged in containers, such as, for example, pivotably mounted doors 3 located at the rear, attachment hones 4 for receiving lifting equipment, fixing elements and locking elements, side pockets 5 for receiving the forks of fork-lift trucks, and which is designed so as to be stacked with one cargo holder received on top of another cargo holder, for example on board ships etc., for example during transport of the containers 2, and which is designed to permit, inter alia, the container 2 to be freighted to the intended destination overland on its own wheels 6 after unloading of the container from the ship in question. The said wheels 6, which can be conventional air-filled rubber-tyred wheels and which can be supported by one or more axles spring-mounted in a known manner, are designed so that they can be moved between a storage position Y held inside the outer limit 7 in question of the cargo holder and a driving position X held outside the limit 7 of the cargo holder. Moreover, the wheels 6 are designed so as to be movable between the said positions X, Y in connection with the loading and unloading of the cargo holder 2 in question onto or from a ship etc. In addition, coupling means 8, which permit releasable connection to a haulage vehicle, are arranged on the said cargo holder 2 on its underside 9 in the area of the front section 2A of the cargo holder.

The said wheels 6 are arranged at the rear section 2B of the cargo holder, so that they can be received in a tunnel-like passage 10, formed as a wheel reception space, between the doors 3 located at the rear of the cargo holder and a rear loading opening 11.

The wheels 6, as a common unit together with associated spring elements etc. 12 and support part 13, can be mounted pivotably about a suitable support axle 14 which, in the example shown, is located on the lower cross-bar 15 located at the rear end 2B of the container in question and extending across the container 2. It is thereby possible to pivot the support part 13, forming the wheel frame, and wheels 6 and spring etc. 12 between a lowered essentially horizontal position X, to form an extended floor section of the cargo space 2C of the container, and which is located at the same level as the floor 16 of the container by means of the support part 13, and a raised essentially vertical position Y, to form a rear wall section of the container 2, extending between the rear vertical frame members 17 of the container.

The container 2 is provided with all the equipment which is required for overland transport and shipping in the respective countries in which the invention is intended to be used. Thus, on the said wheel frame 13, there may be mounted a number of lights, mud flaps, rear bumpers, registration plates etc. (not shown) and also any necessary brakes and shock absorbers.

In addition, at a distance from the said wheels 6, a pivotably mounted stand support 18 is arranged in the form of a column for supporting the front end 2A of the container when the container 2 is standing on a base 19 for coupling to a haulage vehicle etc., and the said support 18 is expediently designed so as to lower automatically when the container 2 is to be set up for haulage.

The wheels 6 are designed to automatically lower, for example by their own weight, when the container 2 is lifted up by crane or fork-lift truck, or to lower in another way, and a locking arrangement 20 is provided for fixing the wheels 6 in the intended position Y or X, for example by being connected to the rear vertical or horizontal beams 17, 21 respectively of the container, for the purpose of preventing the wheels 6 from rising when the container 2 is placed on the ground etc. 19. A knob 22 or some other limiting device can be arranged in order to limit the dounward suing of the wheels past their intended driving position X at which they are intended to be locked.

When the wheels 6 are to be raised, the container 2 is lifted slightly so that the locking arrangement 20 is released. Thereafter, the container 2 is lowered onto a base such as, for example, the top part of a similar container 2, in which connection, due to the weight of the container, the wheels 6 are automatically made to suing into the said space 10 in which the wheels are locked, for example by means of the said locking arrangement 20, into the storage position Y.

The wheels 6 and the column 18 can be manoeuvred manually, as stated, but can also be manoeuvred electrically, hydraulically, pneumatically, or by a combination of these.

The container chassis for its haulage arrangement on land is integral with the container 2 itself and is thus at all times firmly connected to the container 2 so that, by this means, no separate detached chassis is required for overland transport of the container 2 after its unloading from the ship.

Figure 9 shows a wheel bogie arrangement with double axles in which the wheels 6 are mounted in the same way as in the case of wheel undercarriages with a single axle, i.e. supported by a plate 13A which is pivotably mounted about a pivot hinge 14A located at the rear end of the container and is movable and lockable in a similar way and in corresponding positions X, Y as in the previously described construction. The only essential difference is in the size of the two different spaces 10 and 10A, i.e. the container has a scanner cargo space inside its rear doors 3 in the double-wheel bogie arrangement as shown in the drawing in Figure 9.

Figure 7¹ shows a variant of the single-wheel axle arrangement in which the wheels 6 are supported by a plate 13¹ which is mounted on the lower frame members 21 of the container in the area directly behind the doors 3¹, so that the wheels can pivot essentially 90° between the two end positions X, Y.

Figure 7² shows a further variant of a single-wheel arrangement in which the wheels 6 are mounted on a support part 13² which is mounted in its middle area around a pivot hinge 14², by which means the wheels 6 can be turned essentially 180° around the pivot hinge 14² between the end positions X, Y.

Finally, Figures 9¹, 14 and 15 show a variant which comprises a bogie with double wheel axles and in which the wheels 6 are supported by a plate 23 which is mounted pivotably about a support axle 14B which is located behind the doors 3 of the container. In the raised position Y the plate 23 and the wheels 6 are received in a space formed outside the doors 3, whereas in the lowered position X the plate 23, in the same way as in the previously described embodiments, forms an extension of the cargo floor of the container and a section 23A even projects beyond the rear vertical uprights 17 of the container. This plate etc. 23 can also be locked in the intended position X, Y by means of a suitable locking arrangement 20.

The invention can be simply adapted to already existing container holders of the type mentioned by lengthening them slightly or can be completely constructed as new, in which connection the height of the container can be increased if it is desired to maintain unchanged the loading capacity with unchanged length and breadth of the containers.

In addition, the invention means that the containers do not have to remain standing in the ports etc., but can be driven away immediately after unloading and can easily be moved within the port area as and when required, without heavy lifting equipment having to be used.

Moreover, the containers 2 are of a strength matching that of conventional containers, and there is no more risk of damage to the cargo space and the container and contents than there is in conventional containers, and for this reason the question of reliability does not pose any problems.

By means of the present invention a good-performance transport system is achieved in which the weight of the transport containers remains considerably lower than the conventional combination of cargo holder and chassis, and this results, inter alia, in improved economy as regards overland transport of the containers.

The invention is particularly suitable for advantageous adaptation to refrigerated and/or freezer containers, where it is of particularly great importance, especially for refrigerated containers, that these reach their place of destination quickly so that the cargo contents are not spoilt as a result of long freight and/or storage periods.

Finally, it should be mentioned that the containers 2 are easy to identify since they carry registration plates, for which reason the risk of loosing the containers 2 is reduced.

The invention is not limited to the exemplary embodiments described above and shown in the drawings, but can be modified within the scope of the patent claims without departing from the invention.

## Claims

1. Arrangement comprising a closeable cargo holder (2) of the container type with doors (3) located at the rear, and which is designed so as to be stacked with one cargo holder on top of another cargo holder on board ships etc., and so as to be freighted to the intended destination onland after unloading and to be transferred between shore and ship by means of lifting equipment, wherein the cargo holder has wheels (6) which are movable between a storage position (Y) in which they are held inside the outer limits (7) of the cargo holder and a driving position (X) in which they are held outside the limits (7) of the cargo holder, which wheels can be received in a tunnel-like passage (10), formed as a wheel reception space, and are designed so as to be movable between the said positions (Y, X) in connection with the loading and unloading of the cargo holder (2), characterized in that the said wheel reception space is at the rear section (2B) of the cargo holder, between the doors (3), located at the rear of the container, and a rear loading opening (11), and in that the cargo holder (2) comprises, on the underside (9) of the container in the area of its front section (2A), coupling means (8) for releasable connection to haulage vehicles.

2. Arrangement according to claim 1, characterized in that the said wheels (6) are accommodated on one or more wheel axles.

3. Arrangement according to claim 2, characterized in that the wheels (6) are pivotably mounted as a unit with associated spring elements.

4. Arrangement according to claim 3, characterized in that the wheels (6) are mounted on a crossbar (15) extending across the rear end (2B) of the container.

5. Arrangement according to one of claims 3-4, characterized in that the wheels (6) are mounted on a wheel frame (13) which is pivotable between a lowered essentially horizontal position, to form a floor section, and a raised essentially vertical position to form a wall section.

6. Arrangement according to claim 5, characterized in that, on the said wheel frame (13), there are mounted a number of lights, mud flaps, rear bumpers, registration plates ect.

7. Arrangement according to any one of the preceding claims, characterized in that the wheels (6) are designed to be moved between the said positions (Y, X) by suitable means, for example manually, electrically, hydraulically, pneumatically, or by a combination of these.

8. Arrangement according to any one of the preceding claims, characterized in that, at a distance from the said wheels (6), a pivotably mounted cargo holder column (18) is arranged for supporting the front end (2A) of the cargo holder.

## Patentansprüche

1. Vorrichtung, die einen verschließbaren Frachtbehälter (2) vom Containertyp mit an der Rückseite angeordneten Türen (3) aufweist, und welche derart ausgebildet ist, daß ein Frachtbehälter oberhalb eines anderen Frachtbehälters an Bord von Schiffen usw. stapelbar ist, und derart, daß er nach dem Entladen über Land zu dem beabsichtigten Bestimmungsort verfrachtbar ist und zwischen Ufer und Schiff mittels einer Hebeeinrichtung überführbar ist, wobei der Frachtbehälter Räder (6) hat, welche beweglich zwischen einer Lagerposition (Y), in der sie innerhalb der äußeren Begrenzungen (7) des Frachtbehälters gehalten sind, und einer Fahrposition (X), in der sie außerhalb der Begrenzungen des Frachtbehälters gehalten sind, angeordnet sind, wobei die Räder in einer schachtartigen als Radaufnahmeraum gebildeten Durchführung (10) aufgenommen werden können, und sie so ausgebildet sind, daß sie in Verbindung mit dem Laden und Entladen des Frachtbehälters zwischen den Positionen (Y,X) beweglich sind **dadurch gekennzeichnet,** daß der besagte Radaufnahmeraum am rückwärtigen Abschnitt (2B) des Frachtbehälters zwischen den an der Rückseite des Containers angeordneten Türen (3) und der rückwärtigen Ladeöffnung (11) liegt, und daß der Frachtbehälter (2) an der Unterseite (9) des Containers im Bereich seines vorderen Abschnitts (2A) Verbindungsmittel für eine lösbare Verbindung mit Transportfahrzeugen aufweist.

2. Vorrichtung nach Anspruch 1, **dadurch gekennzeichnet,** daß die Räder (6) an einer oder mehreren Radachsen angebracht sind.

3. Vorrichtung nach Anspruch 2, **dadurch gekennzeichnet,** daß die Räder (6) als eine Einheit mit zugehörigen Federelementen schwenkbar befestigt sind.

4. Vorrichtung nach Anspruch 3, **dadurch gekennzeichnet,** daß die Räder (6) an einem sich entlang dem rückwärtigen Ende (2B) des Containers erstreckenden Querträger (15) befestigt sind.

5. Vorrichtung nach einem der Ansprüche 3 bis 4, **dadurch gekennzeichnet,** daß die Räder (6) an ein Fahrgestell (13) befestigt sind, welches schwenkbar zwischen einer erniedrigten im wesentlichen horizontalen einen Bodenbereich bildenden Position und einer erhöhten im wesentlichen vertikalen einen Wandbereich bildenden Position liegt.

6. Vorrichtung nach Anspruch 5, **dadurch gekennzeichnet,** daß an das Fahrgestell (13) eine Vielzahl von Lampen, Schmutzfängern, rückwärtigen Stoßstangen, Nummernschildern usw. befestigt sind.

7. Vorrichtung nach einem der vorhergehenden Ansprüche, **dadurch gekennzeichnet,** daß die Räder (6) derart ausgebildet sind, daß sie durch geeigntete Mittel, z.B. manuelle, elektrische, hydraulische, pneumatische, oder eine Kombination daraus, zwischen den besagten Positionen (Y,X) bewegbar sind.

8. Vorrichtung nach einer der vorhergehenden Ansprüche, **dadurch gekennzeichnet,** daß zur Unterstützung des vorderen Bereichs (2A) des Frachtbehälters eine schwenkbar angebrachte Frachtbehälterstütze von den Rädern (6) beabstandet angeordnet ist.

## Revendications

1. Ensemble comprenant un réceptacle (2) qui peut être fermé, qui est destiné à une cargaison et qui est du type d'un conteneur, ayant des portes (3) placées à l'arrière et qui est destiné à être empilé de manière que les réceptacles soient placés les uns sur les autres à bord des navires, etc. et de manière qu'il puisse être transporté à la destination prévue à terre après déchargement et transféré de la côte au navire à l'aide d'un appareillage de levage, le réceptacle de cargaison ayant des roues (6) qui sont mobiles entre une position (Y) de rangement dans laquelle elles sont maintenues à l'intérieur des limites externes (7) du réceptacle de cargaison et une position d'entraînement (X) dans laquelle elles sont maintenues en dehors des limites (7) du réceptacle, les roues pouvant être logées dans un passage (10) en forme de tunnel réalisé sous forme d'un espace de logement de roues, celles-ci étant réalisées afin qu'elles soient mobiles entre lesdites positions (Y, X) en fonction du chargement et du déchargement du réceptacle (2), caractérisé en ce que l'espace de logement des roues est placé dans le tronçon arrière (2B) du réceptacle de cargaison, entre les portes (3), à l'arrière du conteneur, et une ouverture arrière de chargement (11), et en ce que le réceptacle (2) comporte, à la face inférieure (9) du conteneur et dans la région de son tronçon avant (2A), un dispositif (8) d'accouplement destiné à permettre un raccordement temporaire à des véhicules de traction.

2. Ensemble selon la revendication 1, caractérisé en ce que les roues (6) sont placées sur un ou plusieurs essieux.

3. Ensemble selon la revendication 2, caractérisé en ce que les roues (6) sont montées sous forme articulée comme un tout avec des éléments associés à ressort.

4. Ensemble selon la revendication 3, caractérisé en ce que les roues (6) sont montées sur une traverse (15) disposée transversalement à l'extrémité arrière (2B) du conteneur.

5. Ensemble selon l'une des revendications 3 et 4, caractérisé en ce que les roues (6) sont montées sur un châssis (13) qui peut pivoter entre une position pratiquement horizontale abaissée pour la formation d'un tronçon de plancher, et une position sensiblement verticale et soulevée pour la formation d'un tronçon de paroi.

6. Ensemble selon la revendication 5, caractérisé en ce que, sur le châssis (13) de support de roues, sont montés un certain nombre de lampes, de garde-boue, de pare-chocs arrière, de plaques d'immatriculation, etc.

7. Ensemble selon l'une quelconque des revendications précédentes, caractérisé en ce que les roues (6) sont destinées à être déplacées entre lesdites positions (Y, X) par un dispositif convenable, par exemple de type manuel, électrique, hydraulique, pneumatique ou sous forme d'une combinaison.

8. Ensemble selon l'une quelconque des revendications précédentes, caractérisé en ce que, à une certaine distance des roues (6), une colonne (18) du réceptacle de cargaison, montée sous forme articulée, est destinée à supporter l'extrémité avant (2A) du réceptacle de cargaison.
